# EUROPÄISCHE PATENTSCHRIFT

(11) **EP 3 466 508 B1**
(45) Veröffentlichungstag und Bekanntmachung des Hinweises auf die Patenterteilung: **29.07.2020**
(21) Anmeldenummer: 18188131.9
(22) Anmeldetag: 09.08.2018
(51) Int. Cl.: B01D 5/00, B01D 19/00

(54) **WÄRMETRÄGERÖLANLAGE ZUR ENTGASUNG DES WÄRMETRÄGERÖLS**
HEATER OIL ASSEMBLY FOR DEGASING SAID OIL
INSTALLATION POUR LE DEGAZAGE D'UNE HUILE CALOPORTEUSE

(30) Priorität: 05.10.2017 DE 102017217717
(43) Veröffentlichungstag der Anmeldung: 10.04.2019
(73) Patentinhaber: Ness Wärmetechnik GmbH, 73630 Remshalden (DE)
(72) Erfinder: NESS, Andreas, 73614 Schorndorf (DE); BITTER, Helmuth, 73547 Lorch (DE)
(74) Vertreter: Kohler Schmid Möbus Patentanwälte

(56) Entgegenhaltungen:
- WO-A1-00/09236
- WO-A1-95/29600
- DE-A1-102009 048 062
- US-A- 5 393 498

## Beschreibung

Die Erfindung betrifft eine Wärmeträgerölanlage mit einem Ölversorgungskreislauf, der eine Ölfördereinrichtung aufweist, mittels derer ein in dem Ölversorgungskreislauf zirkulierender Versorgungsstrom von Wärmeträgeröl erzeugbar ist, sowie mit einer Aufbereitungsvorrichtung zur Aufbereitung des in dem Ölversorgungskreislauf zirkulierenden Wärmeträgeröls, die zu dem Ölversorgungskreislauf parallel geschaltet ist und die eine Trennvorrichtung sowie eine Kondensationsvorrichtung aufweist,
- wobei der Trennvorrichtung der Aufbereitungsvorrichtung ein aus dem Versorgungsstrom abgezweigter Aufbereitungsstrom von aufzubereitendem Wärmeträgeröl zuführbar ist,
- wobei mittels der Trennvorrichtung leichtflüchtige Bestandteile unter Überführung der leichtflüchtigen Bestandteile in den gasförmigen Zustand von dem Wärmeträgeröl des Aufbereitungsstroms trennbar und mittels der Trennvorrichtung erzeugte gasförmige leichtflüchtige Bestandteile des Wärmeträgeröls des Aufbereitungsstroms mittels der Kondensationsvorrichtung der Aufbereitungsvorrichtung verflüssigbar sind,
- wobei die Trennvorrichtung einen Gasraum aufweist zur Aufnahme von gasförmigen leichtflüchtigen Bestandteilen des Wärmeträgeröls des Aufbereitungsstroms und
- wobei der Gasraum der Trennvorrichtung über eine Verbindungsleitung an einen Gasraum der Kondensationsvorrichtung angeschlossen ist, welchen die Kondensationsvorrichtung zusätzlich zu einer Kondensationseinheit und einem Sammelbehälter für verflüssigte leichtflüchtige Bestandteile des Wärmeträgeröls des Aufbereitungsstroms aufweist.

Die Erfindung betrifft außerdem ein Verfahren für die Verwendung einer Wärmeträgerölanlage der vorgenannten Art.

Wärmeträgerölanlagen sind aus einer Vielzahl industrieller Anwendungen bekannt. An derartigen Anlagen wird einem Wärmeverbraucher, beispielsweise einer Spanplattenpresse, mittels Wärmeträgeröl, welches in einem Ölversorgungskreislauf als Versorgungsstrom zirkuliert, Wärme zugeführt. Als Wärmeträgeröl ("Thermoöl", "Thermalöl") werden vorzugsweise Mineralöle und synthetische Öle verwendet. Ein Ölerhitzer der Wärmeträgerölanlage erwärmt das Wärmeträgeröl auf Vorlauftemperaturen, die 300°C bis 400°C betragen können. Aufgrund der hohen Betriebstemperaturen kommt es in dem Wärmeträgeröl mit der Zeit zur Bildung von leichtflüchtigen Ölbestandteilen, sogenannten "Leichtsiedern". Der Umfang der Leichtsiederbildung ist insbesondere von dem verwendeten Wärmeträgeröl und von der Betriebstemperatur der Anlage abhängig. Leichtsieder verdampfen und entzünden sich bereits bei niedrigen Temperaturen und bewirken eine Absenkung des Flammpunktes des Wärmeträgeröls. Beispielsweise im Falle des Alkans C14 liegt der Siedepunkt bei etwa 250°C und der Flammpunkt bei etwa 100°C. Insofern bilden Leichtsieder ein Sicherheitsrisiko beim Betrieb von Wärmeträgerölanlagen. Darüber hinaus können Leichtsieder in Pumpen, die als Ölfördereinrichtungen dienen und den in dem Ölversorgungskreislauf zirkulierenden Versorgungsstrom erzeugen, zu Kavitationserscheinungen führen und dadurch die Betriebssicherheit von Wärmeträgerölanlagen beeinträchtigen. In Anbetracht der mit der Existenz von Leichtsiedern verbundenen Negativerscheinungen besteht die Notwendigkeit, den Leichtsiedergehalt des Wärmeträgeröls von Wärmeträgerölanlagen auf einem möglichst niedrigen Niveau zu halten.

Zu diesem Zweck ist im Falle des gattungsbildenden Standes der Technik gemäß DE 10 2009 048 062 A1 ein zu dem Ölversorgungskreislauf einer Wärmeträgerölanlage parallel geschalteter Leichtsiederabscheider zur Aufbereitung des in dem Ölversorgungskreislauf zirkulierenden Wärmeträgeröls vorgesehen. Einem Sprühentgaser des Leichtsiederabscheiders wird permanent ein aus dem Ölversorgungskreislauf der Wärmeträgerölanlage abgezweigter Teilstrom von aufzubereitendem Wärmeträgeröl zugeführt. Die in dem zugeführten Wärmeträgeröl enthaltenen leichtflüchtigen Bestandteile, die sogenannten "Leichtsieder", werden mittels des Sprühentgasers in den gasförmigen Zustand überführt und dadurch von dem aufzubereitenden Wärmeträgeröl getrennt. Das auf diese Weise aufbereitete flüssige Wärmeträgeröl wird in den Ölversorgungskreislauf zurückgeleitet, die gasförmigen Leichtsieder gelangen gemeinsam mit anderen in einem Gasraum des Sprühentgasers vorhandenen Gasen aus dem Gasraum des Sprühentgasers in einen Kondensator des Leichtsiederabscheiders, wo sie über eine Kondensationseinheit geführt werden und dabei zumindest weitestgehend zu einer Leichtsiederflüssigkeit kondensieren. Die Leichtsiederflüssigkeit sammelt sich unter Schwerkraftwirkung im unteren Teil des Kondensators, von wo die Leichtsiederflüssigkeit von Zeit zu Zeit abgelassen wird. Oberhalb des Flüssigkeitsspiegels der Leichtsiederflüssigkeit ist ein Gasraum des Kondensators ausgebildet. Die Förderung der gasförmigen Leichtsieder aus dem Gasraum des Sprühentgasers in den Kondensator erfolgt unter der Wirkung eines Druckunterschieds zwischen dem Druck im Innern des Kondensators und dem Druck in dem Gasraum des Sprühentgasers. Der Druck im Innern des Kondensators ist niedriger als der Druck in dem Gasraum des Sprühentgasers. Der Minderdruck im Innern des Kondensators baut sich aufgrund der Kondensation der Leichtsiederflüssigkeit auf und ist darauf zurückzuführen, dass der Partialdruck der gasförmigen Leichtsieder im Innern des Kondensators infolge der Verflüssigung von gasförmigen Leichtsiedern abnimmt. Darüber hinaus bewirkt auch das gelegentliche Ablassen von Leichtsiederflüssigkeit aus dem Kondensator, dass gasförmige Leichtsieder aus dem Gasraum des Sprühentgasers in den Kondensator nachströmen.

Die Aufgabe der vorliegenden Erfindung besteht darin, mit möglichst einfachen Mitteln die Leistungsfähigkeit einer Wärmeträgerölanlage bei der Aufbereitung des in dem Ölversorgungskreislauf der Wärmeträgerölanlage zirkulierenden Wärmeträgeröls gegenüber dem Stand der Technik zu erhöhen.

Erfindungsgemäß gelöst wird diese Aufgabe durch die Wärmeträgerölanlage nach Patentanspruch 1 und durch das Verfahren gemäß Patentanspruch 6 für die Verwendung einer Wärmeträgerölanlage.

Im Falle der Erfindung kann eine als Strahlpumpe ausgebildete Vakuumpumpe dafür sorgen, dass gasförmige Leichtsieder, die mittels der Trennvorrichtung der für die Wärmeträgerölanlage vorgesehenen Aufbereitungsvorrichtung von dem aufzubereitenden Teilstrom von Wärmeträgeröl getrennt worden sind, aus dem die gasförmigen Leichtsieder aufnehmenden Gasraum der Trennvorrichtung in die Kondensationsvorrichtung der Aufbereitungsvorrichtung gelangen. Strahlpumpen, sogenannte "Ejektoren", haben sich als dauerhaft funktionssichere, wartungsarme und in einer Vielzahl von Ausführungen erhältliche Unter- beziehungsweise Minderdruckerzeuger bewährt.

Die Strahlpumpe ist mit ihrer Saugseite an den Gasraum der Kondensationsvorrichtung angeschlossen. Der Gasraum der Kondensationsvorrichtung steht seinerseits mit dem Gasraum der Trennvorrichtung der Aufbereitungsvorrichtung in Verbindung. Ein mittels der Strahlpumpe an den Gasraum der Kondensationsvorrichtung angelegter und gegenüber dem Druck in dem Gasraum der Trennvorrichtung reduzierter Minderdruck bewirkt folglich, dass gasförmige Leichtsieder aus dem Gasraum der Trennvorrichtung in die Kondensationsvorrichtung nachströmen, wo die gasförmigen Leichtsieder verflüssigt werden.

Von besonderem Vorteil ist die erfindungsgemäße Strahlpumpe insofern, als sie mit Wärmeträgeröl des aus dem Ölversorgungskreislauf der Wärmeträgerölanlage abgezweigten Aufbereitungsstroms betrieben wird und dementsprechend zu ihrem Betrieb Medien genutzt werden, die an einer Wärmeträgerölanlage üblicher Bauart ohnehin verfügbar sind.

Bei entsprechender, insbesondere leistungsbezogener Abstimmung auf die übrigen Komponenten der Aufbereitungsvorrichtung kann die erfindungsgemäße Strahlpumpe einen mengengenmäßig maximierten Durchsatz der Aufbereitungsvorrichtung und dadurch eine hohe Aufbereitungsleistung der Aufbereitungsvorrichtung gewährleisten. Eine hohe Leistungsfähigkeit der Aufbereitungsvorrichtung wiederum verhindert mit Sicherheit eine Überfrachtung des in dem Ölversorgungskreislauf der betreffenden Wärmeträgerölanlage zirkulierenden Wärmeträgeröls mit leichtflüchtigen Bestandteilen und bewirkt dadurch eine hohe Betriebssicherheit der Wärmeträgerölanlage. Wird eine Strahlpumpe mit veränderlicher Leistung eingesetzt, so kann die Fördermenge der von der Trennvorrichtung zu der Kondensationsvorrichtung strömenden gasförmigen Leichtsieder mittels der Strahlpumpe variiert und dadurch insbesondere die Aufbereitungsleistung der Aufbereitungsvorrichtung an wechselnde Bedürfnisse angepasst werden.

Besondere Ausführungsarten der Wärmeträgerölanlage gemäß Patentanspruch 1 ergeben sich aus den abhängigen Patentansprüchen 2 bis 5.

Im Falle der Erfindungsbauart gemäß Patentanspruch 2 wird ein Mediengemisch, das bei Betrieb der Strahlpumpe aus dem als Treibmedium der Strahlpumpe genutzten Wärmeträgeröl des Aufbereitungsstroms und aus dem an der Saugseite der Strahlpumpe angesaugten Saugmedium erzeugt wird, stromaufwärts der Trennvorrichtung dieser zugeführt. Auf diese Art und Weise verbleibt das zum Betrieb der Strahlpumpe genutzte Wärmeträgeröl in dem Aufbereitungsstrom des mittels der Trennvorrichtung der Aufbereitungsvorrichtung aufzubereitenden Wärmeträgeröls. Der Betrieb der Strahlpumpe ist folglich nicht mit einem Verlust an Wärmeträgeröl behaftet. Außerdem werden etwaige, mittels der Strahlpumpe aus der Kondensationsvorrichtung und/oder aus der Trennvorrichtung abgesaugte Medien in die Trennvorrichtung und unter Umständen über die Trennvorrichtung in die Kondensationsvorrichtung rückgeführt. Von Vorteil ist dabei beispielsweise die Rückführung von teuren Inertgasen wie etwa N₂, die in die Trennvorrichtung und/oder in die Kondensationsvorrichtung der Aufbereitungsvorrichtung beispielsweise aus Gründen des Brand- und Explosionsschutzes und/oder zur Beeinflussung der Druckverhältnisse aufgegeben werden und deren Verlust durch die erfindungsgemäße Rezirkulation vermieden wird.

In weiterer Ausgestaltung der Erfindung kann ausweislich Patentanspruch 3 die Strahlpumpe mittels einer gesteuert betätigbaren Schaltvorrichtung auf den Gasraum der Kondensationsvorrichtung aufgeschaltet werden. Die gesteuert betätigbare Schaltvorrichtung ermöglicht es insbesondere, die Strahlpumpe nur dann zur Erzeugung eines Minderdruck in der Kondensationsvorrichtung der Aufbereitungsvorrichtung zu nutzen, wenn dies erforderlich beziehungsweise zweckmäßig ist.

Von besonderem Vorteil sind die Erfindungsmerkmale von Patentanspruch 3 im Falle einer Wärmeträgerölanlage, an welcher der Minderdruck zur Förderung von gasförmigen Leichtsiedern aus dem Gasraum der Trennvorrichtung der Aufbereitungsvorrichtung in die Kondensationsvorrichtung auf zweierlei Weise erzeugt werden kann, indem zusätzlich zu dem mittels der Strahlpumpe erzeugten pumpengenerierten Minderdruck ein aufgrund der Verflüssigung von gasförmigen Leichtsiedern mittels der Kondensationsvorrichtung in deren Gasraum auftretender kondensationsbedingter Minderdruck zur Förderung von gasförmigen Leichtsiedern aus dem Gasraum der Trennvorrichtung der Aufbereitungsvorrichtung in die Kondensationsvorrichtung genutzt werden kann. Eine entsprechende Bauart der erfindungsgemäßen Wärmeträgerölanlage ist Gegenstand von Patentanspruch 4. Mittels einer ersten Druckmessvorrichtung wird der mittels der Strahlpumpe erzeugbare pumpengenerierte Minderdruck in dem Gasraum der Kondensationsvorrichtung gemessen. Eine zweite Druckmessvorrichtung ist zur Messung des kondensationsbedingten Minderdrucks in dem Gasraum der Kondensationsvorrichtung vorgesehen. Übersteigt der Betrag des gemessenen pumpengenerierten Minderdrucks den Betrag des gemessenen kondensationsbedingten Minderdrucks, so kann durch Aufschalten der Strahlpumpe auf den Gasraum der Kondensationsvorrichtung die Förderung von gasförmigen Leichtsiedern aus dem Gasraum der Trennvorrichtung in die Kondensationsvorrichtung gegenüber der Förderung aufgrund des kondensationsbedingten Minderdrucks gesteigert werden.

In weiterer bevorzugter Ausgestaltung der Erfindung umfasst die gesteuert betätigbare Schaltvorrichtung zum wahlweisen Aufschalten der Strahlpumpe auf den Gasraum des Kondensators der Einfachheit halber ein gesteuert schaltbares Absperrventil in einer Saugleitung der Strahlpumpe (Patentanspruch 5). Zum Aufschalten der Strahlpumpe auf den Gasraum der Kondensationsvorrichtung wird das Absperrventil in einen geöffneten Zustand überführt. In einen geschlossenen Zustand wird das Absperrventil geschaltet, wenn an dem Gasraum der Kondensationsvorrichtung kein pumpengenerierter Minderdruck anliegen soll. Aufgrund des Vorhandenseins des gesteuert schaltbaren Absperrventils kann die Strahlpumpe dauerhaft in Betrieb sein, ohne dass aufgrund des Betriebs der Strahlpumpe zwangsläufig ein pumpengenerierter Minderdruck an dem Gasraum der Kondensationsvorrichtung anliegen würde. Dieser Umstand ist insbesondere dann von Vorteil, wenn eine mittels des Wärmeträgeröls des Aufbereitungsstroms betriebene Strahlpumpe vorgesehen ist, die permanent von aufzubereitendem Wärmeträgeröl durchströmt wird aber nur unter bestimmten Bedingungen zur Förderung von gasförmigen Leichtsiedern aus dem Gasraum der Trennvorrichtung in die Kondensationsvorrichtung genutzt werden soll.

Patentanspruch 6 betrifft ein Verfahren für die Verwendung der erfindungsgemäßen Wärmeträgerölanlage nach Anspruch 4 und Anspruch 5, im Falle dessen ein in einer Saugleitung der Strahlpumpe angeordnetes Absperrventil in Abhängigkeit von den Druckverhältnissen, die durch Druckmessung beidseits des Absperrventils ermittelt werden, in den geöffneten oder in den geschlossenen Zustand geschaltet wird.

Nachfolgend wird die Erfindung anhand beispielhafter schematischer Darstellungen näher erläutert. Es zeigen:
- Figur 1:: den prinzipiellen Aufbau einer Wärmeträgerölanlage mit einer Strahlpumpe zur Erzeugung eines pumpengenerierten Minderdrucks in einer Kondensationsvorrichtung der Wärmeträgerölanlage und
- Figur 2:: eine stark schematisierte Darstellung der Strahlpumpe gemäß Figur 1.

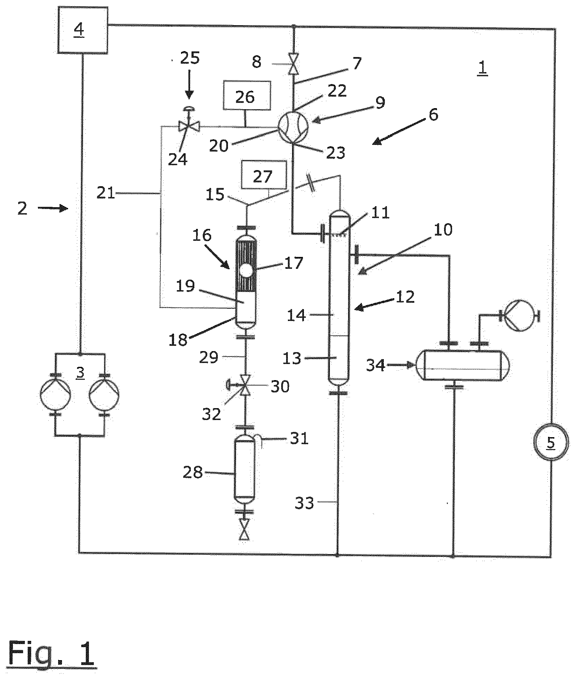

Gemäß Figur 1 weist eine Wärmeträgerölanlage 1 einen Ölversorgungskreislauf 2 mit einer Pumpstation 3 als Ölfördereinrichtung, mit einem Ölerhitzer 4 sowie mit einem Wärmeverbraucher 5 auf. Die Pumpstation 3 umfasst zwei Kreiselpumpen herkömmlicher Bauart, die einen in dem Ölversorgungskreislauf 2 zirkulierenden Versorgungsstrom von Wärmeträgeröl erzeugen. Als Wärmeträgeröl ist in dem gezeigten Beispielsfall ein mineralisches Thermoöl vorgesehen. Der Ölerhitzer 4 kann mit fossilen Brennstoffen oder mit Produktionsreststoffen beheizt werden und erwärmt das Wärmeträgeröl auf eine Temperatur zwischen 280°C und 350°C. Mit dieser Vorlauftemperatur gelangt das Wärmeträgeröl von dem Ölerhitzer 4 zu dem Wärmeverbraucher 5, hier einer Spanplattenpresse. An dem Wärmeverbraucher 5 wird dem Wärmeträgeröl Wärme entzogen. Die Rücklauftemperatur des Wärmeträgeröls nach Verlassen des Wärmeverbrauchers 5 liegt zwischen 250°C und 300°C.

Parallel zu dem Öl-Versorgungskreislauf 2 ist ein Leichtsiederabscheider 6 geschaltet. Der Leichtsiederabscheider 6 bildet eine Aufbereitungsvorrichtung und dient als solche dazu, "Leichtsieder", das heißt leichtflüchtige Bestandteile des Wärmeträgeröls, aus dem in dem Ölversorgungskreislauf 2 als Versorgungsstrom zirkulierenden Wärmeträgeröl zu entfernen. Zu diesem Zweck ist der Leichtsiederabscheider 6 über eine Zulaufleitung 7 permanent auf den Ölversorgungskreislauf 2 aufgeschaltet. In dem dargestellten Beispielsfall werden aus dem Wärmeträgeröl des Versorgungsstroms Bestandteile mit einem Siedepunkt unter 250°C als Leichtsieder entfernt. Der Siedepunkt ist insbesondere durch eine entsprechende Einstellung der Druckverhältnisse in dem Leichtsiederabscheider 6 wählbar.

Mit Hilfe eines in der Zulaufleitung 7 vorgesehenen Drosselventils 8 wird im Vorlauf des Wärmeverbrauchers 5 aus dem in dem Ölversorgungskreislauf 2 zirkulierenden Versorgungsstrom permanent ein Aufbereitungsstrom von Wärmeträgeröl abgezweigt. Der Umfang des abgezweigten Aufbereitungsstroms kann durch entsprechende Einstellung des Drosselventils 8 flexibel festgelegt werden.

Nach Passieren des Drosselventils 8 gelangt der Aufbereitungsstrom zu einer Vakuumpumpe in Form einer Strahlpumpe 9 und nach Passieren der Strahlpumpe 9 zu einem als Trennvorrichtung vorgesehenen Sprühentgaser 10 des Leichtsiederabscheiders 6. Auf die Strahlpumpe 9 wird nachfolgend im Detail eingegangen. Anstelle des Sprühentgasers 10 ist beispielsweise auch eine Destillationsvorrichtung denkbar. Ein Düsenrohr 11 des Sprühentgasers 10 ragt in einen Behälter 12 des Sprühentgasers 10.

In dem Sprühentgaser 10 wird das Wärmeträgeröl des Aufbereitungsstroms zunächst unter einen hohen Druck gesetzt. Mit Austreten aus dem Düsenrohr 11 entspannt sich das zuvor unter hohen Druck gesetzte Wärmeträgeröl und die leichtflüchtigen Ölbestandteile, die sogenannten "Leichtsieder", gelangen in den gasförmigen Aggregatszustand, während die Ölbestandteile mit höherem Siedepunkt im flüssigen Zustand verbleiben und als aufbereitetes Ölvolumen 13 im unteren Teil des Behälters 12 gesammelt werden.

Oberhalb des Flüssigkeitsspiegels des aufbereiteten Ölvolumens 13 ist in dem Behälter 12 ein Gasraum 14 des Sprühentgasers 10 ausgebildet. In dem Gasraum 14 sammeln sich die gasförmigen Leichtsieder, die mittels des Sprühentgasers 10 unter Überführung in den gasförmigen Zustand von dem Wärmeträgeröl des Aufbereitungsstroms getrennt worden sind. Zusätzlich zu gasförmigen Leichtsiedern befinden sich in dem dargestellten Beispielsfall weitere Gase in dem Gasraum 14 des Sprühentgasers 10. So wird beispielsweise Inertgas in nicht näher dargestellter Weise aus Gründen des Brand- und Explosionsschutzes und zur Einstellung der Druckverhältnisse in dem Leichtsiederabscheider 6 in den Gasraum 14 aufgegeben.

Über eine Verbindungsleitung 15 ist der Gasraum 14 des Sprühentgasers 10 an eine Kondensationsvorrichtung 16 angeschlossen. Aufgrund eines im Innern der Kondensationsvorrichtung 16 herrschenden Minderdrucks, der gegenüber dem Druck in dem Gasraum 14 des Sprühentgasers 10 reduziert ist und auf dessen Erzeugung nachfolgend im Einzelnen eingegangen wird, gelangen gasförmige Leichtsieder, die an dem Sprühentgaser 10 von dem Wärmeträgeröl des Aufbereitungsstroms getrennt worden sind, über die Verbindungsleitung 15 in die Kondensationsvorrichtung 16.

Dort werden die gasförmigen Leichtsieder über eine Kondensationseinheit 17 der Kondensationsvorrichtung 16 geleitet und dadurch zumindest weitestgehend verflüssigt. Die Kondensationseinheit 17 ist in dem dargestellten Beispielsfall luftgekühlt. Alternativ wäre eine wassergekühlte Kondensationseinheit 17 möglich.

Die verflüssigten Leichtsieder werden in einem Kondensatsammelbehälter 18 der Kondensationsvorrichtung 16 aufgefangen. Oberhalb des Flüssigkeitsspiegels der verflüssigten Leichtsieder ist im Innern der Kondensationsvorrichtung 16 ein Gasraum 19 ausgebildet, in welchem noch nicht kondensierte gasförmige Leichtsieder und im dargestellten Beispielsfall auch Inertgas anstehen.

Aufgrund der Kondensation von gasförmigen Leichtsiedern an der Kondensationseinheit 17 sinkt der Partialdruck der gasförmigen Leichtsieder im Innern der Kondensationsvorrichtung 16. Der sich damit in dem Gasraum 19 der Kondensationsvorrichtung 16 ergebende kondensationsbedingte Minderdruck kann den vorstehend genannten und die Förderung von gasförmigen Leichtsiedern aus dem Gasraum 14 des Sprühentgasers 10 in die Kondensationsvorrichtung 16 bewirkenden Minderdruck bilden.

Anstelle des kondensationsbedingten Minderdrucks kann zur Förderung von gasförmigen Leichtsiedern aus dem Gasraum 14 des Sprühentgasers 10 in die Kondensationsvorrichtung 16 ein mittels der Stahlpumpe 9 erzeugter pumpengenerierter Minderdruck an den Gasraum 19 der Kondensationsvorrichtung 16 angelegt werden.

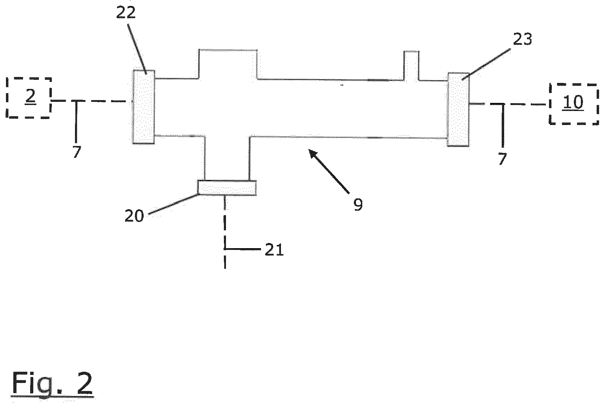

Die Strahlpumpe 9 ist in Figur 2 im Einzelnen gezeigt.

Eine Saugseite 20 der Strahlpumpe 9 ist über eine Saugleitung 21 mit dem Gasraum 19 der Kondensationsvorrichtung 16 verbindbar. Als Treibmedium nutzt die Strahlpumpe 9 Wärmeträgeröl des aus dem Ölversorgungskreislauf 2 abgezweigten Aufbereitungsstroms. An einem Eintritt 22 und an einem Austritt 23 ist die Strahlpumpe 9 deshalb an die von dem Ölversorgungskreislauf 2 abzweigende Zulaufleitung 7 des Leichtsiederabscheiders 6 angeschlossen. Dabei mündet der Eintritt 22 der Strahlpumpe 9 zu dem Ölversorgungskreislauf 2 hin in die Zulaufleitung 7. Die Mündung des Austritts 23 der Strahlpumpe 9 in die Zulaufleitung 7 befindet sich an der zu dem Sprühentgaser 10 hin weisenden Seite der Strahlpumpe 9.

In der Saugleitung 21 der Strahlpumpe 9 ist ein Absperrventil 24 angeordnet, das eine Komponente einer gesteuert betätigbaren Schaltvorrichtung 25 bildet und das in einen geöffneten Zustand und in einen geschlossenen Zustand überführt werden kann. Eine erste Druckmessvorrichtung 26 dient zur Messung des pumpengenerierten Minderdrucks, der bei geschlossenem Absperrventil 24 durch die Strahlpumpe 9 in der Saugleitung 21 zwischen dem Absperrventil 24 und der Saugseite 20 der Strahlpumpe 4 erzeugt wird. Mittels einer zweiten Druckmessvorrichtung 27 wird der kondensationsbedingte Minderdruck in dem Gasraum 19 der Kondensationsvorrichtung 16 gemessen. In dem dargestellten Beispielsfall führt die zweite Druckmessvorrichtung 27 die ihr obliegende Druckmessung in der Verbindungsleitung 15 zwischen dem Sprühentgaser 10 und der Kondensationsvorrichtung 16 durch. Alternativ könnte die zweite Druckmessvorrichtung 27 den kondensationsbedingten Minderdruck in dem Gasraum 19 der Kondensationsvorrichtung 16 oder beispielsweise auch in dem zwischen dem Absperrventil 24 und der Kondensationsvorrichtung 16 verlaufenden Abschnitt der Saugleitung 21 der Strahlpumpe 9 messen.

Die von der ersten Messvorrichtung 26 und der zweiten Messvorrichtung 27 gelieferten Messwerte werden in herkömmlicher Weise rechnergestützt ausgewertet. Übersteigt der Betrag des von der ersten Messvorrichtung 26 ermittelten pumpengenerierten Minderdrucks den Betrag des von der zweiten Messvorrichtung 27 gemessenen kondensationsbedingten Minderdrucks, so wird an der Schaltvorrichtung 25 in bekannter Weise eine Steuersignal erzeugt, aufgrund dessen das Absperrventil 24 motorisch aus dem geschlossenen in den geöffneten Zustand überführt und dadurch die Strahlpumpe 9 auf den Gasraum 19 der Kondensationsvorrichtung 16 aufgeschaltet wird. Der von der Strahlpumpe 9 erzeugte pumpengenerierte Minderdruck bewirkt dann die Förderung von gasförmigen Leichtsiedern aus dem Gasraum 14 des Sprühentgasers 10 in die Kondensationsvorrichtung 16.

In jedem Fall wird der betragsmäßig größte der verfügbaren Minderdrucke genutzt, um gasförmige Leichtsieder aus dem Gasraum 14 des Sprühentgasers 10 in die Kondensationsvorrichtung 16 zu fördern.

Bei geöffnetem Absperrventil 24 wird ein durch die Strahlpumpe 9 über die Saugleitung 21 angesaugtes Saugmedium im Innern der Strahlpumpe 9 mit dem als Treibmedium verwendeten Wärmeträgeröl des dem Leichtsiederabscheider 6 zuzuführenden Aufbereitungsstroms gemischt. Das dadurch gebildete Mediengemisch strömt von der Strahlpumpe 9 zu dem Sprühentgaser 10. Beispielsweise etwaige in dem Saugmedium enthaltene Inertgase, die wie vorliegend unter anderem aus Brand- und Explosionsschutzgründen in den Sprühentgaser 10 und/oder in die Kondensationsvorrichtung 16 aufgegeben worden sind, werden auf diese Art und Weise in den Sprühentgaser 10 und über diesen in die Kondensationsvorrichtung 16 rückgeführt. Unerwünschte Gasverluste werden dadurch vermieden.

An der Kondensationsvorrichtung 16 werden die verflüssigten Leichtsieder von Zeit zu Zeit aus dem Kondensatsammelbehälter 18 abgelassen und in einen Leichtsiederbehälter 28 geleitet. Zu diesem Zweck ist der Leichtsiederbehälter 28 über eine Ablassleitung 29 mit einem zeitgesteuerten Ventil 30 an den Kondensatsammelbehälter 18 angeschlossen. In voreingestellten Zeitabständen öffnet das zeitgesteuerte Ventil 30 und Leichtsiederflüssigkeit kann aus dem Kondensatsammelbehälter 18 in den Leichtsiederbehälter 28 abströmen. Eine Behälterentlüftung 31 des Leichtsiederbehälters 28 ist in Figur 1 angedeutet.
Bei geöffnetem Ventil 30 können aus der Kondensationsvorrichtung 16 neben Leichtsiederflüssigkeit, die in den Leichtsiederbehälter 28 abströmt, auch noch nicht kondensierte und dementsprechend gasförmige Leichtsieder und sonstige gasförmige Stoffe wie etwa Inertgas abgeführt werden. Die abgeführten Gase werden gegebenenfalls über einen Gasaustritt 32 abgeblasen.

Das mittels des Leichtsiederabscheiders 6 aufbereitete und in dem Behälter 12 des Sprühentgasers 10 aufgefangene Wärmeträgeröl wird über eine Rücklaufleitung 33 in den Ölversorgungskreislauf 2 zurückgeleitet.

Durch die an der Wärmeträgerölanlage 1 realisierte permanente Leichtsiederabscheidung wird der Flammpunkt des in dem Öl-Versorgungskreislauf 2 zirkulierenden Wärmeträgeröls hoch gehalten. Dadurch wird eine hohe Betriebssicherheit der Wärmeträgerölanlage 1 sichergestellt. Die Standzeit des Wärmeträgeröls verlängert sich deutlich.

Der Vollständigkeit halber ist in Figur 1 ein Ausdehnungsbehälter 34 für Wärmeträgeröl dargestellt, der in der in DE 10 2009 048 062 A1 im Einzelnen beschriebenen Weise mit den übrigen Anlagenteilen der Wärmeträgerölanlage 1 kombiniert ist.

## Patentansprüche

1. Wärmeträgerölanlage mit einem Ölversorgungskreislauf (2), der eine Ölfördereinrichtung (3) aufweist, mittels derer ein in dem Ölversorgungskreislauf (2) zirkulierender Versorgungsstrom von Wärmeträgeröl erzeugbar ist, sowie mit einer Aufbereitungsvorrichtung (6) zur Aufbereitung des in dem Ölversorgungskreislauf (2) zirkulierenden Wärmeträgeröls, die zu dem Ölversorgungskreislauf (2) parallel geschaltet ist und die eine Trennvorrichtung (10) sowie eine Kondensationsvorrichtung (16) aufweist,
• wobei der Trennvorrichtung (10) der Aufbereitungsvorrichtung (6) ein aus dem Versorgungsstrom abgezweigter Aufbereitungsstrom von aufzubereitendem Wärmeträgeröl zuführbar ist,
• wobei mittels der Trennvorrichtung (10) leichtflüchtige Bestandteile unter Überführung der leichtflüchtigen Bestandteile in den gasförmigen Zustand von dem Wärmeträgeröl des Aufbereitungsstroms trennbar und mittels der Trennvorrichtung (10) erzeugte gasförmige leichtflüchtige Bestandteile des Wärmeträgeröls des Aufbereitungsstroms mittels der Kondensationsvorrichtung (16) der Aufbereitungsvorrichtung (6) verflüssigbar sind,
• wobei die Trennvorrichtung (10) einen Gasraum (14) aufweist zur Aufnahme von gasförmigen leichtflüchtigen Bestandteilen des Wärmeträgeröls des Aufbereitungsstroms und
• wobei der Gasraum (14) der Trennvorrichtung (10) über eine Verbindungsleitung (15) an einen Gasraum (19) der Kondensationsvorrichtung (16) angeschlossen ist, welchen die Kondensationsvorrichtung (16) zusätzlich zu einer Kondensationseinheit (17) und einem Sammelbehälter (18) für verflüssigte leichtflüchtige Bestandteile des Wärmeträgeröls des Aufbereitungsstroms aufweist
**dadurch gekennzeichnet, dass**
eine als Strahlpumpe (9) ausgebildete Vakuumpumpe vorgesehen ist mit einer Saugseite (20), an welcher die Strahlpumpe (9) an den Gasraum (19) der Kondensationsvorrichtung (16) angeschlossen und mit dem Gasraum (19) der Kondensationsvorrichtung (16) verbindbar ist, wobei mittels der Strahlpumpe (9) in dem Gasraum (19) der Kondensationsvorrichtung (16) ein pumpengenerierter Minderdruck erzeugbar ist, der gegenüber einem Druck in dem Gasraum (14) der Trennvorrichtung (10) reduziert ist und aufgrund dessen gasförmige leichtflüchtige Bestandteile des Wärmeträgeröls des Aufbereitungsstroms durch die Verbindungsleitung (15) zwischen den Gasräumen (14, 19) der Trennvorrichtung (10) und der Kondensationsvorrichtung (16) aus dem Gasraum (14) der Trennvorrichtung (10) in die Kondensationsvorrichtung (16) förderbar sind und dass als Treibmedium der Strahlpumpe (9) Wärmeträgeröl des Aufbereitungsstroms vorgesehen ist und die Strahlpumpe (9) einen zu dem Ölversorgungskreislauf (2) hin mündenden Eintritt (22) für das als Treibmedium vorgesehene Wärmeträgeröl des Aufbereitungsstroms aufweist.

2. Wärmeträgerölanlage nach Anspruch 1, **dadurch gekennzeichnet, dass** ein in der Strahlpumpe (9) erzeugtes Mediengemisch, welches das als Treibmedium vorgesehene Wärmeträgeröl des Aufbereitungsstroms und ein diesem Wärmeträgeröl beigemischtes Saugmedium umfasst, der Trennvorrichtung (10) zuführbar ist und dass die Strahlpumpe (9) einen zu der Trennvorrichtung (10) hin mündenden Austritt (23) für das Mediengemisch aufweist.

3. Wärmeträgerölanlage nach einem der vorhergehenden Ansprüche, **dadurch gekennzeichnet, dass** eine gesteuert betätigbare Schaltvorrichtung (25) vorgesehen ist, mittels derer die Saugseite (20) der Strahlpumpe (9) auf den Gasraum (19) der Kondensationsvorrichtung (16) aufschaltbar ist.

4. Wärmeträgerölanlage nach Anspruch 3, **dadurch gekennzeichnet,**
• **dass** eine erste Druckmessvorrichtung (26) vorgesehen ist zur Messung des mittels der Strahlpumpe (9) erzeugbaren pumpengenerierten Minderdrucks in dem Gasraum (19) der Kondensationsvorrichtung (16),
• **dass** eine zweite Druckmessvorrichtung (27) vorgesehen ist zur Messung eines aufgrund der in der Kondensationsvorrichtung (16) erfolgenden Verflüssigung von leichtflüchtigen Bestandteilen des Wärmeträgeröls des Aufbereitungsstroms erzeugten kondensationsbedingten Minderdrucks in dem Gasraum (19) der Kondensationsvorrichtung (16), wobei der kondensationsbedingte Minderdruck in dem Gasraum (19) der Kondensationsvorrichtung (16) gegenüber dem Druck in dem Gasraum (14) der Trennvorrichtung (10) reduziert ist und wobei aufgrund des kondensationsbedingten Minderdrucks in dem Gasraum (19) der Kondensationsvorrichtung (16) gasförmige leichtflüchtige Bestandteile des Wärmeträgeröls des Aufbereitungsstroms durch die Verbindungsleitung (15) zwischen den Gasräumen (14, 19) der Trennvorrichtung (10) und der Kondensationsvorrichtung (16) aus dem Gasraum (14) der Trennvorrichtung (10) in die Kondensationsvorrichtung (16) förderbar sind und
• **dass** die Saugseite (20) der Strahlpumpe (9) mittels der gesteuert betätigbaren Schaltvorrichtung (25) auf den Gasraum (19) der Kondensationsvorrichtung (16) aufschaltbar ist, wenn der Betrag des gemessenen pumpengenerierten Minderdrucks größer ist als der Betrag des gemessenen kondensationsbedingten Minderdrucks.

5. Wärmeträgerölanlage nach Anspruch 3, **dadurch gekennzeichnet, dass** die gesteuert betätigbare Schaltvorrichtung (25) ein gesteuert schaltbares Absperrventil (24) aufweist, das in einer zwischen dem Gasraum (19) der Kondensationsvorrichtung (16) und der Saugseite (20) der Strahlpumpe (9) vorgesehenen Saugleitung (21) der Strahlpumpe (9) angeordnet ist und das gesteuert in einen geöffneten Zustand und in einen geschlossenen Zustand schaltbar ist, wobei die Saugseite (20) der Strahlpumpe (9) bei geöffnetem Zustand des Absperrventils (24) auf den Gasraum (19) der Kondensationsvorrichtung (16) aufgeschaltet und bei geschlossenem Zustand des Absperrventils (24) von dem Gasraum (19) der Kondensationsvorrichtung (16) getrennt ist.

6. Verfahren für die Verwendung der Wärmeträgerölanlage nach Anspruch 4 und Anspruch 5, **dadurch gekennzeichnet, dass** bei geschlossenem Zustand des Absperrventils (24) und eingeschalteter Strahlpumpe (9) in der Saugleitung (21) der Strahlpumpe (9) mittels der ersten Druckmessvorrichtung (26) der Druck an der zu der Saugseite (20) der Strahlpumpe (9) hin liegenden Seite des Absperrventils (24) als pumpengenerierter Minderdruck und mittels der zweiten Druckmessvorrichtung (27) der kondensationsbedingte Minderdruck gemessen wird und dass das Absperrventil (24) aus dem geschlossenen Zustand in den geöffneten Zustand geschaltet wird, wenn der Betrag des mittels der ersten Druckmessvorrichtung (26) gemessenen Drucks größer ist als der Betrag des mittels der zweiten Druckmessvorrichtung (27) gemessenen Drucks.

## Claims

1. Thermal oil system comprising an oil supply circuit (2), which circuit includes an oil conveying means (3) by means of which a supply stream of thermal oil that circulates in the oil supply circuit (2) can be generated, and further comprising a processing device (6) for processing the thermal oil circulating in the oil supply circuit (2), which processing device is connected in parallel to the oil supply circuit (2) and has a separating device (10) and a condensation device (16),
• it being possible to supply the separating device (10) of the processing device (6) with a processing stream of thermal oil to be processed which processing stream is branched off from the supply stream,
• it being possible to separate volatile constituents from the thermal oil of the processing stream by means of the separating device (10) by converting the volatile constituents into the gaseous state and it being possible to liquefy gaseous volatile constituents of the thermal oil of the processing stream produced by the separating device (10) by means of the condensation device (16) of the processing device (6),
• the separating device (10) having a gas chamber (14) for receiving gaseous volatile constituents of the thermal oil of the processing stream and
• the gas chamber (14) of the separating device (10) being connected to a gas chamber (19) of the condensation device (16) via a connecting line (15), which gas chamber (19) of the condensation device (16) is comprised by the condensation device (16) in addition to a condensation unit (17) and a collecting container (18) for liquefied volatile constituents of the thermal oil of the processing stream,
**characterized in that**
a vacuum pump designed as a jet pump (9) is provided, the jet pump (9) having a suction side (20) at which the jet pump (9) is joined to the gas chamber (19) of the condensation device (16) and can be connected to the gas chamber (19) of the condensation device (16), the jet pump (9) being able to produce a pump-generated decreased pressure in the gas chamber (19) of the condensation device (16), which decreased pressure is reduced with respect to a pressure in the gas chamber (14) of the separating device (10) and due to which decreased pressure gaseous volatile constituents of the thermal oil of the processing stream can be conveyed from the gas chamber (14) of the separating device (10) into the condensation device (16) via the connecting line (15) between the gas chambers (14, 19) of the separating device (10) and the condensation device (16), and **in that** thermal oil of the processing stream is provided as the motive medium of the jet pump (9) and the jet pump (9) has an inlet (22) which opens toward the oil supply circuit (2) for the thermal oil of the processing stream provided as the motive medium.

2. Thermal oil system according to claim 1, **characterized in that** a media mixture produced in the jet pump (9), which mixture comprises the thermal oil of the processing stream provided as the motive medium and a suction fluid added to said thermal oil, can be supplied to the separating device (10) and **in that** the jet pump (9) has an outlet (23) for the media mixture which outlet (23) opens toward the separating device (10).

3. Thermal oil system according to either of the preceding claims, **characterized in that** a switching device (25) is provided which can be operated in a controlled manner and by means of which the suction side (20) of the jet pump (9) can be connected to the gas chamber (19) of the condensation device (16).

4. Thermal oil system according to claim 3, **characterized in that**
• a first pressure measuring device (26) is provided for measuring the pump-generated decreased pressure in the gas chamber (19) of the condensation device (16), which pump-generated decreased pressure can be produced by the jet pump (9),
• a second pressure measuring device (27) is provided for measuring a condensation-related decreased pressure in the gas chamber (19) of the condensation device (16), which condensation-related decreased pressure is generated due to the liquefaction in the condensation device (16) of volatile constituents of the thermal oil of the processing stream, the condensation-related decreased pressure in the gas chamber (19) of the condensation device (16) being reduced with respect to the pressure in the gas chamber (14) of the separating device (10) and it being possible, due to the condensation-related decreased pressure in the gas chamber (19) of the condensation device (16), to convey gaseous volatile constituents of the thermal oil of the processing stream from the gas chamber (14) of the separating device (10) into the condensation device (16) via the connecting line (15) between the gas chambers (14, 19) of the separating device (10) and the condensation device (16) and
• the suction side (20) of the jet pump (9) can be connected to the gas chamber (19) of the condensation device (16) by means of the switching device (25), which can be operated in a controlled manner, if the value of the measured pump-generated decreased pressure is greater than the value of the measured condensation-related decreased pressure.

5. Thermal oil system according to claim 3, **characterized in that** the switching device (25) which can be operated in a controlled manner has a shut-off valve (24) which can be switched in a controlled manner and which is arranged in a suction line (21) of the jet pump (9), the suction line (21) being provided between the gas chamber (19) of the condensation device (16) and the suction side (20) of the jet pump (9), and which shut-off valve (24) can be switched in a controlled manner into an open state and into a closed state, the suction side (20) of the jet pump (9) being connected to the gas chamber (19) of the condensation device (16) when the shut-off valve (24) is open and the suction side (20) of the jet pump (9) being separated from the gas chamber (19) of the condensation device (16) when the shut-off valve (24) is closed.

6. Method for using the thermal oil system according to claim 4 and claim 5, **characterized in that** when the shut-off valve (24) is closed and the jet pump (9) is switched on, in the suction line (21) of the jet pump (9) the pressure on the side of the shut-off valve (24) facing the suction side (20) of the jet pump (9) is measured by means of the first pressure measuring device (26) as a pump-generated decreased pressure and the condensation-related decreased pressure is measured by means of the second pressure measuring device (27), and **in that** the shut-off valve (24) is switched from the closed state into the open state when the value of the pressure measured by means of the first pressure measuring device (26) is greater than the value of the pressure measured by means of the second pressure measuring device (27).

## Revendications

1. Installation à huile caloporteuse avec un circuit d'alimentation en huile (2) qui présente un moyen d'alimentation en huile (3) au moyen duquel un flux d'alimentation en huile caloporteuse circulant dans le circuit d'alimentation en huile (2) peut être produit, et avec un dispositif de traitement (6) pour traiter l'huile caloporteuse circulant dans le circuit d'alimentation en huile (2), qui est monté en parallèle avec le circuit d'alimentation en huile (2) et qui présente un dispositif de séparation (10) ainsi qu'un dispositif de condensation (16),
• dans laquelle un flux d'huile caloporteuse à traiter, qui est dérivé du flux d'alimentation, peut être amené au dispositif de séparation (10) du dispositif de traitement (6),
• dans laquelle, au moyen du dispositif de séparation (10), les constituants hautement volatils peuvent être séparés de l'huile caloporteuse du flux de traitement par passage des constituants hautement volatils à l'état gazeux et les constituants gazeux hautement volatils de l'huile caloporteuse du flux de traitement produits au moyen du dispositif de séparation (10) peuvent être liquéfiés au moyen du dispositif de condensation (16) du dispositif de préparation (6),
• dans laquelle le dispositif de séparation (10) présente une chambre à gaz (14) destinée à recevoir les constituants gazeux hautement volatils de l'huile caloporteuse du flux de traitement et
• dans laquelle la chambre à gaz (14) du dispositif de séparation (10) est reliée par une conduite de liaison (15) à une chambre à gaz (19) du dispositif de condensation (16) que le dispositif de condensation (16) présente en plus d'une unité de condensation (17) et d'un réservoir collecteur (18) pour les constituants hautement volatils liquéfiés de l'huile caloporteuse du flux de traitement,
**caractérisée en ce**
**qu'**une pompe à vide réalisée sous la forme d'une pompe à jet (9) est prévue avec un côté aspiration (20), auquel la pompe à jet (9) est raccordée à la chambre à gaz (19) du dispositif de condensation (16) et peut être reliée à la chambre à gaz (19) du dispositif de condensation (16), une dépression générée par pompe pouvant être produite dans la chambre à gaz (19) du dispositif de condensation (16) au moyen de la pompe à jet (9), laquelle est réduite par rapport à une pression dans la chambre à gaz (14) du dispositif de séparation (10) et grâce à laquelle des constituants gazeux hautement volatils de l'huile caloporteuse du flux de traitement peuvent être transportés par la conduite de liaison (15) entre les chambres à gaz (14, 19) du dispositif de séparation (10) et du dispositif de condensation (16), depuis la chambre à gaz (14) du dispositif de séparation (10) dans le dispositif de condensation (16), et que de l'huile caloporteuse du flux de traitement est prévue comme fluide propulseur de la pompe à jet (9) et la pompe à jet (9) présente une entrée (22), débouchant vers le circuit d'alimentation en huile (2), pour l'huile caloporteuse du flux de traitement prévue comme fluide propulseur.

2. Installation à huile caloporteuse selon la revendication 1, **caractérisée en ce qu'**un mélange de fluides produit dans la pompe à jet (9), qui comprend l'huile caloporteuse du flux de traitement prévue comme fluide propulseur et un fluide à aspirer mélangé à cette huile caloporteuse, peut être amené au dispositif de séparation (10) et que la pompe à jet (9) présente une sortie (23), débouchant vers le dispositif de séparation (10), pour le mélange de fluides.

3. Installation à huile caloporteuse selon l'une des revendications précédentes, **caractérisée en ce qu'**un dispositif de commutation (25) pouvant être actionné de manière commandée est prévu, au moyen duquel le côté aspiration (20) de la pompe à jet (9) peut être raccordé à la chambre à gaz (19) du dispositif de condensation (16).

4. Installation à huile caloporteuse selon la revendication 3, **caractérisée en ce**
• **qu'**un premier dispositif de mesure de pression (26) est prévu pour mesurer la dépression générée par pompe, pouvant être produite au moyen de la pompe à jet (9), dans la chambre à gaz (19) du dispositif de condensation (16),
• **qu'**un deuxième dispositif de mesure de pression (27) est prévu pour mesurer une dépression due à la condensation, produite par la liquéfaction dans le dispositif de condensation (16) des constituants hautement volatils de l'huile caloporteuse du flux de traitement, dans la chambre à gaz (19) du dispositif de condensation (16), sachant que la dépression due à la condensation dans la chambre à gaz (19) du dispositif de condensation (16) est réduite par rapport à la pression dans la chambre à gaz (14) du dispositif de séparation (10) et sachant que, en raison de la dépression due à la condensation dans la chambre à gaz (19) du dispositif de condensation (16), des constituants gazeux hautement volatils de l'huile caloporteuse du flux de traitement peuvent être transportés par la conduite de liaison (15) entre les chambre à gaz (14, 19) du dispositif de séparation (10) et du dispositif de condensation (16), depuis la chambre à gaz (14) du dispositif de séparation (10) dans le dispositif de condensation (16) et
• **que** le côté aspiration (20) de la pompe à jet (9) peut être raccordé à la chambre à gaz (19) du dispositif de condensation (16) au moyen du dispositif de commutation (25) pouvant être actionné de manière commandée lorsque le montant de la dépression générée par pompe mesurée est supérieur au montant de la dépression due à la condensation mesurée.

5. Installation à huile caloporteuse selon la revendication 3, **caractérisée en ce que** le dispositif de commutation (25) pouvant être actionné de manière commandée présente une vanne d'arrêt (24) pouvant être commutée de manière commandée, qui est disposée dans une conduite d'aspiration (21) de la pompe à jet (9) prévue entre la chambre à gaz (19) du dispositif de condensation (16) et le côté aspiration (20) de la pompe à jet (9) et qui peut être commutée de manière commandée dans un état ouvert et dans un état fermé, dans laquelle le côté aspiration (20) de la pompe à jet (9) est relié à la chambre à gaz (19) du dispositif de condensation (16) lorsque la vanne d'arrêt (24) est à l'état ouvert et est séparé de la chambre à gaz (19) du dispositif de condensation (16) lorsque la vanne d'arrêt (24) est à l'état fermé.

6. Procédé pour l'utilisation de l'installation à huile caloporteuse selon la revendication 4 et la revendication 5, **caractérisé en ce que**, lorsque la vanne d'arrêt (24) est à l'état fermé et que la pompe à jet (9) est en marche, la pression sur le côté de la vanne d'arrêt (24) situé du côté aspiration (20) de la pompe à jet (9) est mesurée dans la conduite d'aspiration (21) de la pompe à jet (9) au moyen du premier dispositif de mesure de pression (26) en tant que dépression générée par pompe et la dépression due à la condensation est mesurée au moyen du deuxième dispositif de mesure de pression (27), et que la vanne d'arrêt (24) est commutée de l'état fermé à l'état ouvert lorsque le montant de la pression mesurée au moyen du premier dispositif de mesure de pression (26) est supérieur au montant de la pression mesurée au moyen du deuxième dispositif de mesure de pression (27).
